# EUROPEAN PATENT APPLICATION

(11) **EP 2 940 089 A1**
(43) Date of publication of application: **04.11.2015**
(21) Application number: 13868031.9
(22) Date of filing: 19.12.2013
(51) Int. Cl.: C09D 163/00, C09D 7/12, C09D 183/04

(54) **BACK COATING COMPOSITION AND MIRROR**

(30) Priority: 27.12.2012 JP 2012284687
(71) Applicant: Asahi Glass Company, Limited, Tokyo 100-8405 (JP)
(72) Inventor: ABE, Keisuke, Tokyo 100-8405 (JP); KAMEYAMA, Yasuyuki, Tokyo 100-8405 (JP)
(74) Representative: Müller-Boré & Partner Patentanwälte PartG mbB
(86) International application number: PCT/JP2013/084155
(87) International publication number: WO 2014/103894

(57) **Abstract**

To provide a back coating composition capable of forming a back coating film which is scarcely susceptible to acid erosion, has good appearance and is excellent in water resistance, and a mirror excellent in acid resistance, outer appearance of the back side and water resistance. A back coating composition for forming a back coating film 14 on the back side of a mirror 10, which comprises a thermosetting resin, a pigment, a dispersant and a reactive silicone oil, wherein as the thermosetting resin, an epoxy resin (excluding a reactive silicone oil having epoxy groups) and an amine-type curing agent are contained, as the dispersant, an amino group-containing polymer having an amine value of at least 20 mgKOH/g and having no acid group, is contained, and as the reactive silicone oil, an epoxy-modified silicone oil having epoxy groups and having no polyoxyalkylene chain, is contained. A mirror having a back coating film formed by using the back coating composition.

## Description

### TECHNICAL FIELD

The present invention relates to a back coating composition for forming a back coating film on the back side of a mirror, and a mirror having a back coating film formed on its back side.

### BACKGROUND ART

In a mirror having a silver mirror film formed on a glass substrate, a copper protective film is formed on the silver mirror film to prevent corrosion of the silver mirror film, and further, a back coating film is formed on the copper protective film.

A back coating composition for forming a back coating film usually comprises a thermosetting resin (such as an epoxy resin or an alkyd resin) and a pigment (such as an extender pigment or an anti-corrosive pigment) (Patent Documents 1 and 2).

However, by a conventional back coating film, erosion by an acid was not sufficiently prevented, and in the case of a mirror installed in a bathroom, a restroom, a lavatory, etc., the silver mirror film was likely to be corroded by a reagent having a strong acidity. Therefore, for such a mirror to be installed in a bathroom, a restroom, a lavatory, etc., it is desired to develop a back coating composition capable of forming a back coating film which is scarcely susceptible to acid erosion.

The following one has been proposed as a back coating composition capable of forming a back coating film which is scarcely susceptible to acid erosion.

A back coating composition which comprises a thermosetting resin, a pigment and a dispersant, wherein as the dispersant, an amino group-containing polymer having an amine value of at least 20 mgKOH/g and having no acid group, is contained (Patent Document 3).

However, a coating film formed by such a back coating composition containing an amino group-containing polymer is likely to have such an appearance problem that it has dents or orange peel. Further, when it is left in a high humidity atmosphere for a long period of time, a problem in water resistance (humidity resistance) is likely to occur such that peeling of the silver mirror film results at the periphery (cut surface) of the mirror.

### PRIOR ART DOCUMENTS

### PATENT DOCUMENTS

Patent Document 1: JP-A-7-234306
Patent Document 2: US Patent No. 6750300
Patent Document 3: WO2011/024969

### DISCLOSURE OF INVENTION

### TECHNICAL PROBLEM

It is an object of the present invention to provide a back coating composition capable of forming a back coating film which is scarcely susceptible to acid erosion, has good appearance and is excellent in water resistance, and a mirror excellent in acid resistance, appearance of the back side and water resistance.

### SOLUTION TO PROBLEM

The back coating composition of the present invention is a back coating composition for forming a back coating film on the back side of a mirror, which comprises a thermosetting resin, a pigment, a dispersant and a reactive silicone oil, wherein as the thermosetting resin, an epoxy resin (excluding a reactive silicone oil having epoxy groups) and an amine-type curing agent are contained, as the dispersant, an amino group-containing polymer having an amine value of at least 20 mgKOH/g and having no acid group, is contained, and as the reactive silicone oil, an epoxy-modified silicone oil having epoxy groups and having no polyoxyalkylene chain, is contained.

The epoxy resin is preferably a bisphenol A type epoxy resin.

The amine type curing agent is preferably a dicyandiamide or an organic acid dihydrazide.

The amine value of the amino group-containing polymer is preferably from 20 to 70 mgKOH/g.

The proportion of the amino group-containing polymer is preferably from 20 to 100 mass% in the dispersant (100 mass%).

The functional group equivalent weight of epoxy groups in the epoxy-modified silicone oil is preferably at most 1,000 g/mol.

The back coating composition of the present invention preferably further contains, as the thermosetting resin, at least one curing accelerator selected from the group consisting of organic tin compounds, urea derivatives and imidazoles.

The back coating composition of the present invention is preferably such that in the solid content (100 mass%) of the back coating composition excluding a solvent from the back coating composition, the proportion of the thermosetting resin is from 30 to 50 mass%, the proportion of the pigment is from 50 to 70 mass%, the proportion of the dispersant is from 1 to 13 mass%, and the proportion of the reactive silicone oil is from 0.001 to 0.5 mass%.

The back coating composition of the present invention preferably contains, as the pigment, an extender pigment.

The back coating composition of the present invention preferably contains, as the pigment, an anti-corrosive pigment.

The mirror of the present invention is characterized by comprising a glass substrate, a metal film formed on the glass substrate, and a back coating film formed on the metal film by using the back coating composition of the present invention.

The film thickness of the back coating film is preferably from 30 to 100 µm.

The metal film may consist of a silver mirror film formed on the glass substrate and a metal protective film formed on the silver mirror film or is a silver mirror film formed on the glass substrate.

The mirror of the present invention is preferably a mirror comprising a glass substrate, a metal film formed on the glass substrate, and a back coating film formed on the metal film, said mirror satisfying the following conditions (a) and (b):
(a) after the mirror is immersed in 10 mass% hydrochloric acid at 20°C for 48 hours, peeling of the metal film from a cut surface is at most 5 mm, and
(b) after a cycle comprising a step of letting the mirror stand still in an atmosphere at a temperature of 60°C under a relative humidity of 95% for 8 hours and a step of letting the mirror stand still in an atmosphere at a temperature of 25°C under a relative humidity of 60% for 16 hours, is repeated 40 times, peeling of the metal film from a cut surface is at most 5 mm.

### ADVANTAGEOUS EFFECTS OF INVENTION

According to the back coating composition of the present invention, it is possible to form a back coating film which is scarcely susceptible to acid erosion, has good appearance and is excellent in water resistance.

Further, the mirror of the present invention is excellent in acid resistance, appearance of the back side and water resistance.

### BRIEF DESCRIPTION OF DRAWINGS

Fig. 1 is a cross-sectional view showing a first embodiment of the mirror of the present invention.
Fig. 2 is a cross-sectional view showing a second embodiment of the mirror of the present invention.

### DESCRIPTION OF EMBODIMENTS

The following definitions of terms are applicable to this specification including claims.

A thermosetting resin means a resin which is curable by heating. A curing agent to cure a thermosetting resin, a curing accelerator to accelerate the curing of a thermosetting resin, and a reactive diluent having a relatively low molecular weight, which is reactive with a thermosetting resin, are included in the thermosetting resin.

A dispersant means a compound which is capable of dispersing a pigment in a back coating composition and stabilizing the dispersed state.

Having no acid group means not having an acid group such as a carboxy group or phosphoric acid group in a molecule, and having no acid group can be ascertained by the presence or absence of an acid value.

An amine value is a value to be measured in accordance with JIS K7237.

An acid value is a value to be measured in accordance with JIS K2501.

A reactive silicone oil means a modified silicone oil which has a dimethylpolysiloxane skeleton and has a reactive organic group introduced to either one or each of a side chain or a terminal.

A functional group equivalent weight of epoxy groups means a molecular weight of an epoxy-modified silicone oil per one functional group (epoxy group).

A solvent means a compound which is capable of dissolving or dispersing a thermosetting resin or a pigment, but is not reactive with other components.

A solid content of a back coating composition means components excluding a solvent from the back coating composition and includes a thermosetting resin and other resins.

The expression "to " to define a numerical range is meant to include the numerical values before and after the expression as the lower limit value and the upper limit value, respectively, unless otherwise specified.

### <Back coating composition>

The back coating composition of the present invention is a back coating composition for forming a back coating film on the back side of a mirror, which comprises a thermosetting resin, a pigment, a dispersant and a reactive silicone oil, and which may contain a solvent, other additives, other resins, etc., as the case requires.

### (Thermosetting resin)

The thermosetting resin may, for example, be an epoxy resin, an alkyd resin, a phenol resin or a melamine resin. The back coating composition of the present invention is characterized by containing, as at least a part of the thermosetting resin, an epoxy resin (excluding a reactive silicone oil having epoxy groups) and a curing agent for the epoxy resin, since it is thereby scarcely susceptible to acid erosion when formed into a back coating film.

The epoxy resin may, for example, be a bisphenol A-type epoxy resin, a bisphenol F-type epoxy resin, a novolac type epoxy resin, an amino-modified epoxy resin (JP-A-3-75006) or an esterified bisphenol type epoxy resin (JP-A-5-161531), and from the viewpoint of the corrosion resistance and durability, a bisphenol A-type epoxy resin is particularly preferred.

As the curing agent, an amine type curing agent or an acid anhydride type curing agent may, for example, be mentioned, and the back coating composition of the present invention is characterized by containing an amine type curing agent, as at least a part of the curing agent, since the adhesive properties of the coating film will thereby be good.

The amine type curing agent may, for example, be an aliphatic amine type curing agent, an alicyclic amine type curing agent, an aromatic amine type curing agent, a dicyandiamide type curing agent, a polyamide amine type curing agent or an organic acid dihydrazide, and from the viewpoint of the latent nature and quick curability by heating, dicyandiamide, an organic acid dihydrazide or a polyamide amine type curing agent is preferred, and dicyandiamide or an organic acid dihydrazide is particularly preferred.

The back coating composition of the present invention may further contain, as at least a part of the thermosetting resin, a curing accelerator (curing catalyst). The curing accelerator may, for example, be an organic tin compound, an imidazole, a urea derivative, a tertiary amine or an onium salt, and from such a viewpoint that the temperature required for the curing can be made low, at least one member selected from the group consisting of organic tin compounds, urea derivatives and imidazoles is preferred.

The back coating composition of the present invention may further contain a reactive diluent, as at least a part of the thermosetting resin, for the purpose of adjusting e.g. the viscosity of the back coating composition. As such a reactive diluent, an epoxy compound having a relatively low molecular weight such as a glycidyl ether may be mentioned.

### (Pigment)

The pigment may, for example, be an extender pigment, an anticorrosive pigment or a coloring pigment. The back coating composition of the present invention preferably contains an extender pigment as at least a part of the pigment, since it is thereby possible to impart properties necessary for the coating film. Further, the back coating composition of the present invention preferably contains an anti-corrosive pigment as at least a part of the pigment, with a view to effectively protecting the metal film as the mirror surface.

The extender pigment may, for example, be talc, barium sulfate, mica or calcium carbonate, preferably talc, calcium carbonate or barium sulfate, more preferably talc or barium sulfate.

The anti-corrosive pigment may, for example, be zinc cyanamide, zinc oxide, zinc phosphate, calcium magnesium phosphate, zinc molybdate, barium borate or zinc calcium cyanamide, preferably zinc molybdate, barium borate or zinc calcium cyanamide, more preferably zinc cyanamide or zinc oxide.

The coloring pigment may, for example, be titanium oxide, carbon black or iron oxide, preferably carbon black or titanium oxide, more preferably iron oxide.

### (Dispersant)

The dispersant may, for example, be a dispersant for a pigment. The back coating composition of the present invention is characterized by containing, as at least a part of the dispersant, an amino group-containing polymer having an amine value of at least 20 mgKOH/g and having no acid group (hereinafter referred to as the specific amino group-containing polymer).

The amine value of the specific amino group-containing polymer is at least 20 mgKOH/g, preferably from 20 to 70 mgKOH/g, particularly preferably from 40 to 70 mgKOH/g. When the polymer has an amine value of at least 20 mgKOH/g and has no acid group, it is possible to form a back coating film which is scarcely susceptible to acid erosion. Further, it is preferred that the polymer has amine value of at most 70 mgKOH/g, since hydrophilic amino groups remaining in the coating film without undergoing addition reaction with the epoxy resin are thereby reduced, and no adverse effects will be given to the water resistance of the back coating film.

The reason as to why the specific amino group-containing polymer in the present invention preferably has no acid group, is as follows.

A dispersant is usually used for the purpose of improving the dispersibility of a pigment, etc., and the dispersant is required to have a specific adsorption activity to a pigment. Accordingly, as the dispersant, one having both an acid group and an amino group is widely known. On the other hand, the dispersant (the specific amino group-containing polymer) in the present invention also has a function as a curing catalyst for the thermosetting resin (particularly for an epoxy resin) in addition to the function for adsorption to the pigment and for improvement of the affinity to the thermosetting resin. The specific amino group-containing polymer in the present invention has no acid group and is preferred from such a viewpoint that it promotes curing of the thermosetting resin.

As the specific amino group-containing polymer, for example, the following dispersants manufactured by BYK may be mentioned. The respective amine values and acid values are as shown in brackets.

DISPERBYK (registered trademark)-116 (amine value: 65 mgKOH/g, acid value: 0 mgKOH/g, acrylic copolymer),

DISPERBYK (registered trademark)-2155 (amine value: 48 mgKOH/g, acid value: 0 mgKOH/g, block copolymer),

DISPERBYK (registered trademark)-9077 (amine value: 48 mgKOH/g, acid value: 0 mgKOH/g, high molecular weight copolymer), etc.

As the dispersant, another dispersant may be used in combination with the specific amino group-containing polymer. As such another dispersant, for example, the following dispersants manufactured by BYK may be mentioned.

DISPERBYK (registered trademark)-167 (amine value: 13 mgKOH/g, acid value: 0 mgKOH/g, block copolymer),

DISPERBYK (registered trademark)-163 (amine value: 10 mgKOH/g, acid value: 0 mgKOH/g, block copolymer),

DISPERBYK (registered trademark)-164 (amine value: 18 mgKOH/g, acid value: 0 mgKOH/g, block copolymer),

DISPERBYK (registered trademark)-110 (amine value: 0 mgKOH/g, acid value: 53 mgKOH/g, copolymer having acid groups),

DISPERBYK (registered trademark)-106 (amine value: 74 mgKOH/g, acid value: 132 mgKOH/g, polymer salt having acid groups),

DISPERBYK (registered trademark)-2163 (amine value: 10 mgKOH/g, acid value: 0 mgKOH/g, block copolymer),

DISPERBYK (registered trademark)-2164 (amine value: 14 mgKOH/g, acid value: 0 mgKOH/g, block copolymer), etc.

### (Reactive silicone oil)

The reactive silicone oil may, for example, be an amine-modified silicone oil, an epoxy-modified silicone oil, an alicyclic epoxy-modified silicone oil, a carbinol-modified silicone oil, a mercapto-modified silicone oil, a carboxy-modified silicone oil, a hydrogen-modified silicone oil, a methacryl-modified silicone oil, a polyether-modified silicone oil, a phenol-modified silicone oil, a silanol-modified silicone oil, or a diol-modified silicone oil. The reactive organic group may, for example, be an amino group, an epoxy group, a (meth)acryloyl group, a mercapto group, a carboxy group, a hydroxy group, or a hydrogen atom.

The back coating composition of the present invention is characterized by containing, as at least a part of the reactive silicone oil, an epoxy-modified silicone oil having epoxy groups and having no polyoxyalkylene group (hereinafter referred to as a specific epoxy-modified silicone oil), since it is thereby possible to form a back coating film having good appearance and excellent water resistance.

As the reactive silicone oil has epoxy groups, its compatibility with the thermosetting resin will be good, and it becomes possible to form a back coating film having good appearance. Further, the reactive silicone oil has water repellency, whereby it is possible to form a back coating film excellent in water resistance. Here, even if the reactive silicone oil has epoxy groups, if it has a polyoxyalkylene chain, due to the hydrophilic sites which the polyoxyalkylene chain has from its molecular structure, it tends to be difficult to form a back coating film having good appearance and excellent water resistance.

The functional group equivalent weight of epoxy groups in the specific epoxy-modified silicone oil is preferably at most 1,000 g/mol, more preferably from 200 to 700 g/mol. When the functional group equivalent weight of epoxy groups is at most 1,000 g/mol, the number of epoxy groups per molecule of the specific epoxy-modified silicone oil becomes sufficiently large (i) to further improve the compatibility with the thermosetting resin and (ii) to let the reaction with the thermosetting resin take place sufficiently, thereby to fix the reactive silicone oil sufficiently during the film formation and to prevent bleeding out of the reactive silicone oil. When the functional group equivalent weight of epoxy groups is at least 200 g/mol, the number of epoxy groups per molecule of the specific epoxy-modified silicone oil is prevented from becoming too many, and it is preferred in that while addition polymerizing to the epoxy resin, it imparts a surface tension to the coating material thereby to impart water resistance to the coating film.

As the reactive silicone oil, another modified silicone oil other than the specific epoxy-modified silicone oil, may be used in combination.

Here, with a view to forming a back coating film having good appearance and excellent water resistance, it is preferred that no polyether-modified silicone oil having a polyoxyalkylene chain is contained.

### (Solvent)

The back coating composition of the present invention may contain a solvent. The solvent may, for example, be an aromatic hydrocarbon, an aliphatic hydrocarbon, an ester, an ether, a ketone or an alcohol. Among them, an aromatic hydrocarbon, an aliphatic hydrocarbon or an alcohol is, for example, preferred.

### (Other additives)

The back coating composition of the present invention may contain other additives in addition to the dispersant. The additives may, for example, be a reinforcing material, a thickening agent, a rust-proofing agent, an antisettling agent, a defoaming agent, a surfactant, a rheology controlling agent, etc.

### (Other resins)

The back coating composition of the present invention may contain other resins in addition to the thermosetting resin. Such other resins may, for example, be a polyester, an acrylic resin, a styrene type resin, a vinyl type resin, a ketone resin, rosin, etc.

### (Compositional ratio)

The solid content concentration in the back coating composition of the present invention is preferably from 60 to 100 mass%, more preferably from 70 to 90 mass%. When the solid content concentration is at least 60 mass%, a sufficient film thickness is obtainable.

In the solid content (100 mass%) of the back coating composition, the proportion of the thermosetting resin (including the curing agent, the curing accelerator and the reactive diluent) is preferably from 30 to 50 mass%, more preferably from 35 to 45 mass%. When the proportion of the thermosetting resin is at least 30 mass%, the film-forming property will be good, and sufficient hardness and adhesion of the coating film are obtainable. When the proportion of the thermosetting resin is at most 50 mass%, the proportion of a functional pigment such as an anti-corrosive pigment increases, and the acid resistance, etc. of the coating film will be improved.

The proportion of the pigment in the solid content (100 mass%) of the back coating composition is preferably from 50 to 70 mass%, more preferably from 52 to 68 mass%. When the proportion of the pigment is at least 50 mass%, the acid resistance, etc. of the coating film will be improved. When the proportion of the pigment is at most 70 mass%, the resin component as a film-forming component increases, and sufficient hardness and adhesion of the coating film are obtainable.

The proportion of the dispersant in the solid content (100 mass%) of the back coating composition is preferably from 1 to 13 mass%, more preferably from 1.2 to 11 mass%. When the proportion of the dispersant is at least 1 mass%, the effect of the dispersant is sufficiently obtainable. When the proportion of the dispersant is at most 13 mass%, deterioration in the flowability of the coating composition due to crosslinking of the dispersant itself, is prevented. As a result, the appearance of a coating film to be formed will be better.

The proportion of the reactive silicone oil in the solid content (100 mass%) of the back coating composition is preferably from 0.001 to 0.5 mass%, more preferably from 0.002 to 0.4 mass%. When the proportion of the reactive silicone oil is at least 0.001 mass%, the effect of the reactive silicone oil is sufficiently obtainable. It is preferred that the proportion of the reactive silicone oil is at most 0.5 mass%, since it is thereby possible to reduce the surface tension of the coating material and to form a good coating film surface.

The proportion of the epoxy resin in the thermosetting resin (including the curing agent, the curing accelerator and the reactive diluent) (100 mass%) is preferably from 70 to 90 mass%, more preferably from 80 to 88 mass%. When the proportion of the epoxy resin is at least 70 mass%, the acid resistance of the coating film will be further improved. When the proportion of the epoxy resin is at most 90 mass%, its blend ratio with the curing agent and curing accelerator will be sufficient to form a dense coating film, such being preferred.

The proportion of the amine type curing agent in the thermosetting resin (including the curing agent, the curing accelerator and the reactive diluent) (100 mass%) is preferably from 5 to 12 mass%, more preferably from 7 to 10 mass%. When the proportion of the amine type curing agent is at least 5 mass%, the adhesion properties of the coating film will be further improved. When the proportion of the amine type curing agent is at most 12 mass%, the appearance of the coating film will be improved. Further, an unreacted curing agent remaining in the coating film will be reduced so that the acid resistance will be improved.

The proportion of the curing accelerator in the thermosetting resin (including the curing agent, the curing accelerator and the reactive diluent) (100 mass%) is preferably from 3 to 6 mass%, more preferably from 3.5 to 5.5 mass%. When the proportion of the curing accelerator is at least 3 mass%, adequate curing acceleration will be obtainable so that a dense coating film can be formed. When the proportion of the curing accelerator is at most 6 mass%, an unreacted curing accelerator remaining in the coating film can be reduced so that the acid resistance will be improved.

In the pigment (100 mass%), the proportion of the extender pigment is preferably from 48 to 68 mass%, more preferably from 53 to 63 mass%. When the proportion of the extender pigment is at least 48 mass%, it is possible to prevent deterioration of the flowability of the coating composition. When the proportion of the extender pigment is at most 68 mass%, the other anti-corrosive pigment increases, and the acid resistance, etc. of the coating film will be improved.

In the pigment (100 mass%), the proportion of the anti-corrosive pigment is preferably from 24 to 44 mass%, more preferably from 29 to 39 mass%. When the proportion of the anti-corrosive pigment is at least 24 mass%, an adequate anti-corrosive effect is obtainable. When the proportion of the anti-corrosive pigment is at most 44 mass%, it is possible to prevent deterioration in the flowability of the coating composition.

In the dispersant (100 mass%), the proportion of the specific amino group-containing polymer is preferably from 20 to 100 mass%, more preferably from 30 to 100 mass%, particularly preferably 100 mass%. When the proportion of the specific amino group-containing polymer is at least 20 mass%, an adequate effect is obtainable as a curing catalyst for the thermosetting resin.

In the reactive silicone oil (100 mass%), the proportion of the specific epoxy-modified silicone oil is preferably from 20 to 100 mass%, more preferably from 50 to 100 mass%, particularly preferably 100 mass%. When the proportion of the specific epoxy-modified silicone oil is at least 20 mass%, the effect of the epoxy-modified silicone oil is sufficiently obtainable.

### (Advantageous effects)

The back coating composition of the present invention as described above, contains, as a dispersant, an amino group-containing polymer having an amine value of at least 20 mgKOH/g and having no acid group, whereby it is possible to form a back coating film which is scarcely susceptible to acid erosion. Further, it contains, as a reactive silicone oil, an epoxy-modified silicone oil having epoxy groups and having no polyoxyalkylene chain, whereby it is possible to form a back coating film which has good appearance and is excellent in water resistance.

### <Mirror>

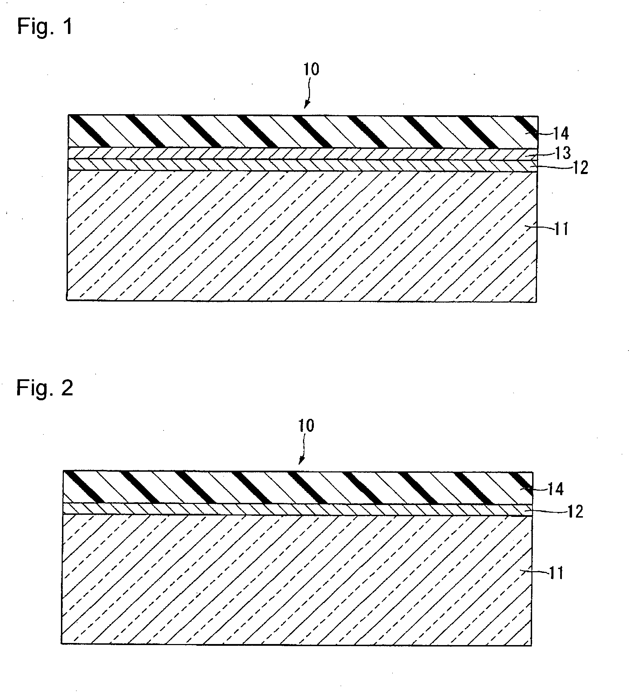

Fig. 1 is a cross-sectional view showing a first embodiment of the mirror of the present invention. A mirror 10 comprises a glass substrate 11, a silver mirror film 12 (metal film) formed on the glass substrate 11, a metal protective film 13 (metal film) formed on the silver mirror film 12, and a back coating film 14 formed on the metal protective film 13.

Fig. 2 is a cross-sectional view showing a second embodiment of the mirror of the present invention. A mirror 10 comprises a glass substrate 11, a silver mirror film 12 (metal film) formed on the glass substrate 11, and a back coating film 14 formed on the silver mirror film 12.

### (Glass substrate)

As the glass substrate, known glass for a mirror may be employed, and for example, soda lime glass may be mentioned.

### (Silver mirror film)

A method for forming the silver mirror film may, for example, be an electroless plating method, a vacuum vapor deposition method or a sputtering method.

The silver mirror film preferably has such a thickness that the silver mirror film becomes within a range of from 0.5 to 2 g/m², preferably from 0.6 to 1.5 g/m².

### (Metal protective film)

The metal protective film is a film made of a metal to be formed for preventing corrosion of the silver mirror film. The metal protective film may be a metal protective film made of copper, a copper alloy, nickel, a nickel alloy, tin, a tin alloy, or the like, and it is usually preferably a copper protective film.

As a method for forming the metal protective film, an electroless plating method may, for example, be mentioned.

The metal protective film preferably has such a thickness that the metal protective film becomes within a range of from 0.1 to 1 g/m², preferably from 0.2 to 0.8 g/m².

The mirror of the present invention may have a metal protective film of two or more layers made of different metals.

Further, as shown in Fig. 2, the mirror of the present invention may not have a metal protective film, since it has a back coating film which is formed by using the back coating composition of the present invention and which is scarcely susceptible to acid erosion.

### (Back coating film)

The back coating film is a film to be formed for preventing corrosion of the silver mirror film and the metal protective film and for improving the mechanical durability thereof.

The back coating film is formed by applying the back coating composition of the present invention on the surface of a metal film (a silver mirror film or a metal protective film), followed by thermal curing.

The application of the back coating composition can be carried out by means of e.g. a brush, a roller, a spray, a flow coater or an applicator, and a flow coater or a roll coater is, for example, preferred.

The amount of the back coating composition to be applied is adjusted so that the film thickness after drying will be from 30 to 100 µm, preferably from 30 to 60 µm.

The temperature at the time of thermal curing of the back coating composition is usually from room temperature to 250°C, preferably from 150 to 180°C.

### (Advantageous effects)

The mirror of the present invention as described above, is excellent in acid resistance, appearance of the back coating film and water resistance, since it has a back coating film formed by using the back coating composition of the present invention.

Specifically, (a) it has such acid resistance that after the mirror of the present invention which was cut, is immersed in 10 mass% hydrochloric acid (first grade reagent) at 20°C for 48 hours, peeling of the metal film from the cut surface is at most 5 mm. Further, (b) it has such water resistance that after a cycle comprising a step of letting the mirror of the present invention which was cut, stand still in an atmosphere at a temperature of 60°C under a relative humidity of 95% for 8 hours and a step of letting the mirror stand still in an atmosphere at a temperature of 25°C under a relative humidity of 60% for 16 hours, is repeated 40 times, peeling of the metal film from the cut surface is at most 5 mm.

### EXAMPLES

Now, the present invention will be described in further detail with reference to Examples, but it should be understood that the present invention is by no means limited to these Examples.

Ex. 2 to 9, 11 to 16, 21 and 28 to 32 are Examples of the present invention, and Ex. 1, 10, 17 to 20 and 22 to 27 are Comparative Examples.

### (Ex. 1)

In the compositional ratio as shown in the column for Ex. 1 in Table 1, the respective materials were introduced into a paint shaker and shaken for 15 minutes to prepare a back coating composition.

On the surface of a sufficiently cleaned glass substrate (size: 90 mm × 40 mm × 5 mm), a silver plating solution comprising a solution containing silver nitrate (an aqueous solution at a silver concentration of 0.08 mol/L) and a reducing liquid (a solution of a compound containing aldehyde groups) to reduce silver, was sprayed to precipitate silver by a silver mirror reaction thereby to form such a film that a silver mirror film would be 1.0 g/m².

The surface of the silver mirror film was washed with water, and then, on the surface, a copper plating solution comprising a solution containing copper sulfate (an aqueous solution at a copper sulfate concentration of 0.15 mol/L) and a reducing liquid (a suspension of base metal powder) to reduce copper, was sprayed to precipitate copper by an electroless plating method thereby to form such a film that a copper protective film would be 0.3 g/m².

The surface of the copper protective film was washed with water and dried, and then, the temperature of the glass substrate was adjusted to room temperature.

On the surface of the copper protective film, the above back coating composition was applied by a flow coating method so that the dried film thickness would be 55 µm, and heated in a drying furnace for 3 minutes so that the temperature of the glass substrate became 135°C, to form a back coating film thereby to obtain a mirror (having the copper protective film).

On the surface of a sufficiently cleaned glass substrate (size: 90 mm × 40 mm × 5 mm), a silver plating solution comprising a solution containing silver nitrate (an aqueous solution at a silver concentration of 0.08 mol/L) and a reducing liquid (a solution of a compound containing aldehyde groups) to reduce silver, was sprayed to precipitate silver by a silver mirror reaction thereby to form such a film that a silver mirror film would be 1.0 g/m².

The surface of the silver mirror film was washed with water and dried, and then, the temperature of the glass substrate was adjusted to room temperature.

On the surface of the silver mirror film, the above back coating composition was applied by a flow coating method so that the dried film thickness would be 55 µm, and heated for 3 minutes in a drying furnace so that the temperature of the glass substrate became 135°C, to form a back coating film thereby to obtain a mirror (having no copper protective film).

### (Ex. 2 to 32)

In the compositional ratio shown in each of columns for Ex. 2 to 32 in Tables 1 to 6, the respective materials were prepared, and a back coating composition having the compositional ratio shown in each column was prepared.

Mirrors (one having a copper protective film and one having no copper protective film) were obtained in the same manner as in Ex. 1 except that the back coating composition was changed.

### (Evaluations)

With respect to the mirrors in Ex. 1 to 32, the results of evaluation of the appearance of coating films, the results of hydrochloric acid tests and the results of water vapor cycle tests, are shown in Tables 1 to 6, respectively.

The evaluation methods are as follows.

### (Appearance of coating film)

A back coating film was visually observed and evaluated by the following standards.

Pass: one other than the following "Fail".

Fail: Circular dents are distinct and observed as defects with the diameter of the dents being at least 1 mm.

### (Hydrochloric acid test)

A mirror having a size of 90 mm × 40 mm was cut into two to obtain mirrors having a size of 45 mm × 40 mm. The cut mirror was immersed in 0.5 mass% hydrochloric acid (first grade reagent) at 20°C for 48 hours, whereupon it was taken out and evaluated by the following standards.

Pass: No abnormality is observed on the silver mirror film, and peeling of the metal film by erosion from the cut surface is at most 5 mm.

Fail: Abnormality is observed on the silver mirror film, or peeling of the metal film by erosion from the cut surface exceeds 5 mm.

### (Water vapor cycle test)

A mirror having a size of 90 mm × 40 mm was cut into two to obtain mirrors having a size of 45 mm × 40 mm. The cut mirror was repeatedly subjected to a cycle comprising a step of letting the mirror stand still in an atmosphere at a temperature of 60°C under a relative humidity of 95% for 8 hours and a step of letting the mirror stand still in an atmosphere at a temperature of 25°C under a relative humidity of 60% for 16 hours. The test was suspended at the time when peeling of the metal film from the cut surface due to erosion exceeded 5 mm, and the number of repeated cycles where peeling of the metal film was maintained to be at most 5 mm, was recorded.

**TABLE 1**

| Ex. | | | 1 | 2 | 3 | 4 | 5 | 6 |
|---|---|---|---|---|---|---|---|---|
| Composition ratio (mass%) | Solvent | MIBK | 17.5 | 17.498 | 17.46 | 17.42 | 17.33 | 17.25 |
| | Epoxy resin | jER828 | 26.7 | 26.7 | 26.7 | 26.7 | 26.7 | 26.7 |
| | Curing agent | DICY | 3.2 | 3.2 | 3.2 | 3.2 | 3.2 | 3.2 |
| | | SDH | | | | | | |
| | | ADH | | | | | | |
| | Reactive diluent | DY-T | 1.4 | 1.4 | 1.4 | 1.4 | 1.4 | 1.4 |
| | Curing accelerator | DBTDL | 0.1 | 0.1 | 0.1 | 0.1 | 0.1 | 0.1 |
| | | UR500 | 1.5 | 1.5 | 1.5 | 1.5 | 1.5 | 1.5 |
| | | 2E4MZ | | | | | | |
| | | IBMI-12 | | | | | | |
| | Dispersant (*1) | BYK116 (65/0) | | | | | | |
| | | BYK2163 (10/0) | 1.3 | | | | | |
| | | BYK2155 (48/0) | | 1.3 | 1.3 | 1.3 | 1.3 | 1.3 |
| | | BYK110 (0/53) | | | | | | |
| | | BYK106 (74/132) | | | | | | |
| | Anti-corrosive pigment | Zinc calcium cyanamide | 16.6 | 16.6 | 16.6 | 16.6 | 16.6 | 16.6 |
| | Extender pigment | Talc | 16.2 | 16.2 | 16.2 | 16.2 | 16.2 | 16.2 |
| | | Barium sulfate | 12.1 | 12.1 | 12.1 | 12.1 | 12.1 | 12.1 |
| | Coloring pigment | Titanium oxide | 3.1 | 3.1 | 3.1 | 3.1 | 3.1 | 3.1 |
| | | Carbon black | 0.3 | 0.3 | 0.3 | 0.3 | 0.3 | 0.3 |
| | Reactive silicone oil (*2) | X-22-2000 (620/absent) | | | | | | |
| | | X-22-4741 (2500/present) | | | | | | |
| | | KF-101 (350/absent) | | 0.002 | 0.04 | 0.08 | 0.17 | 0.25 |
| | | KF-105 (490/absent) | | | | | | |
| | Total | | 100 | 100 | 100 | 100 | 100 | 100 |
| Solid content concentration (mass%) | | | 83 | 83 | 83 | 83 | 83 | 83 |
| Thermosetting resin in solid content (mass%) | | | 40 | 40 | 40 | 40 | 40 | 40 |
| Pigment in solid content (mass%) | | | 59 | 59 | 59 | 58 | 58 | 58 |
| Dispersant in solid content (mass%) | | | 1.58 | 1.58 | 1.57 | 1.57 | 1.57 | 1.57 |
| Reactive silicone oil in solid content (mass%) | | | 0 | 0.0024 | 0.0485 | 0.0969 | 0.2056 | 0.3021 |
| Evaluations | Appearance of coating film | | Fail | Pass | Pass | Pass | Pass | Pass |
| | Hydrochloric acid test | Copper protective film present | Fail | Pass | Pass | Pass | Pass | Pass |
| | | No copper protective film | Fail | Pass | Pass | Pass | Pass | Pass |
| | Water vapor cycle test | Copper protective film present | 15 times | 45 times | 46 times | 52 times | 58 times | 62 times |
| | | No copper protective film | 23 times | 42 times | 43 times | 44 times | 45 times | 49 times |

**TABLE 2**

| Ex. | | | 7 | 8 | 9 | 10 | 11 | 12 |
|---|---|---|---|---|---|---|---|---|
| Composition ratio (mass%) | Solvent | MIBK | 17.17 | 17.42 | 17.17 | 19.36 | 19.358 | 19.32 |
| | Epoxy resin | jER828 | 26.7 | 26.7 | 26.7 | 26.7 | 26.7 | 26.7 |
| | Curing agent | DICY | 3.2 | 3.2 | 3.2 | 2.24 | 2.24 | 2.24 |
| | | SDH | | | | | | |
| | | ADH | | | | | | |
| | Reactive diluent | DY-T | 1.4 | 1.4 | 1.4 | 0.98 | 0.98 | 0.98 |
| | Curing accelerator | DBTDL | 0.1 | 0.1 | 0.1 | 0.07 | 0.07 | 0.07 |
| | | UR500 | 1.5 | 1.5 | 1.5 | 1.05 | 1.05 | 1.05 |
| | | 2E4MZ | | | | | | |
| | | IBMI-12 | | | | | | |
| | Dispersant (*1) | BYK116 (65/0) | | | | | | |
| | | BYK2163 (10/0) | | | | | | |
| | | BYK2155 (48/0) | 1.3 | 1.6 | 1.6 | 0.8 | 1.3 | 1.3 |
| | | BYK110 (0/53) | | | | | | |
| | | BYK106 (74/132) | | | | | | |
| | Anti-corrosive pigment | Zinc calcium cyanamide | 16.6 | 16.6 | 16.6 | 16.6 | 16.6 | 16.6 |
| | Extender pigment | Talc | 16.2 | 16.2 | 16.2 | 16.2 | 16.2 | 16.2 |
| | | Barium sulfate | 12.1 | 12.1 | 12.1 | 12.1 | 12.1 | 12.1 |
| | Coloring pigment | Titanium oxide | 3.1 | 3.1 | 3.1 | 3.1 | 3.1 | 3.1 |
| | | Carbon black | 0.3 | 0.3 | 0.3 | 0.3 | 0.3 | 0.3 |
| | Reactive silicone oil (*2) | X-22-2000 (620/absent) | | 0.08 | | | | |
| | | X-22-4741 (2500/present) | | | | | | |
| | | KF-101 (350/absent) | 0.33 | | | | 0.002 | 0.04 |
| | | KF-105 (490/absent) | | | 0.33 | | | |
| | Total | | 100 | 100.3 | 100.3 | 99.5 | 100 | 100 |
| Solid content concentration (mass%) | | | 83 | 83 | 83 | 80 | 81 | 81 |
| Thermosetting resin in solid content (mass%) | | | 40 | 40 | 40 | 39 | 38 | 38 |
| Pigment in solid content (mass%) | | | 58 | 58 | 58 | 60 | 60 | 60 |
| Dispersant in solid content (mass%) | | | 1.57 | 1.93 | 1.92 | 1.00 | 1.61 | 1.61 |
| Reactive silicone oil in solid content (mass%) | | | 0.3984 | 0.0965 | 0.3970 | 0 | 0.0025 | 0.0496 |
| Evaluations | Appearance of coating film | | Pass | Pass | Pass | Fail | Pass | Pass |
| | Hydrochloric acid test | Copper protective film present | Pass | Pass | Pass | Pass | Pass | Pass |
| | | No copper protective film | Pass | Pass | Pass | Fail | Pass | Pass |
| | Water vapor cycle test | Copper protective film | 71 times | 75 times | 88 times | 41 times | 42 times | 41 times |
| | | No copper protective film | 55 times | 65 times | 77 times | 38 times | 41 times | 42 times |

**TABLE 3**

| Ex. | | | 13 | 14 | 15 | 16 | 17 | 18 |
|---|---|---|---|---|---|---|---|---|
| Composition ratio (mass%) | Solvent | MIBK | 19.28 | 19.19 | 19.11 | 19.03 | 17.5 | 17.498 |
| | Epoxy resin | jER828 | 26.7 | 26.7 | 26.7 | 26.7 | 26.7 | 26.7 |
| | Curing agent | DICY | 2.24 | 2.24 | 2.24 | 2.24 | 3.2 | 3.2 |
| | | SDH | | | | | | |
| | | ADH | | | | | | |
| | Reactive diluent | DY-T | 0.98 | 0.98 | 0.98 | 0.98 | 1.4 | 1.4 |
| | Curing accelerator | DBTDL | 0.07 | 0.07 | 0.07 | 0.07 | 0.1 | 0.1 |
| | | UR500 | 1.05 | 1.05 | 1.05 | 1.05 | 1.5 | 1.5 |
| | | 2E4MZ | | | | | | |
| | | IBMI-12 | | | | | | |
| | Dispersant (*1) | BYK116 (65/0) | | | | | | |
| | | BYK2163 (10/0) | | | | | 1.3 | |
| | | BYK2155 (48/0) | 1.3 | 1.3 | 1.3 | 1.3 | | |
| | | BYK110 (0/53) | | | | | | 1.3 |
| | | BYK106 (74/132) | | | | | | |
| | Anti-corrosive pigment | Zinc calcium cyanamide | 16.6 | 16.6 | 16.6 | 16.6 | 16.6 | 16.6 |
| | Extender pigment | Talc | 16.2 | 16.2 | 16.2 | 16.2 | 16.2 | 16.2 |
| | | Barium sulfate | 12.1 | 12.1 | 12.1 | 12.1 | 12.1 | 12.1 |
| | Coloring pigment | Titanium oxide | 3.1 | 3.1 | 3.1 | 3.1 | 3.1 | 3.1 |
| | | Carbon black | 0.3 | 0.3 | 0.3 | 0.3 | 0.3 | 0.3 |
| | Reactive silicone oil (*2) | X-22-2000 (620/absent) | | | | | | |
| | | X-22-4741 (2500/present) | | | | | | |
| | | KF-101 (350/absent) | 0.08 | 0.17 | 0.25 | 0.33 | | 0.002 |
| | | KF-105 (490/absent) | | | | | | |
| | Total | | 100 | 100 | 100 | 100 | 100 | 100 |
| Solid content concentration (mass%) | | | 81 | 81 | 81 | 81 | 83 | 83 |
| Thermosetting resin in solid content (mass%) | | | 38 | 38 | 38 | 38 | 40 | 40 |
| Pigment in solid content (mass%) | | | 60 | 60 | 60 | 60 | 59 | 59 |
| Dispersant in solid content (mass%) | | | 1.61 | 1.61 | 1.61 | 1.61 | 1.58 | 1.58 |
| Reactive silicone oil in solid content (mass%) | | | 0.0991 | 0.2104 | 0.3091 | 0.4076 | 0 | 0.0024 |
| Evaluations | Appearance of coating film | | Pass | Pass | Pass | Pass | Fail | Fail |
| | Hydrochloric acid test | Copper protective film present | Pass | Pass | Pass | Pass | Fail | Fail |
| | | No copper protective film | Pass | Pass | Pass | Pass | Fail | Fail |
| | Water vapor cycle test | Copper protective film | 44 times | 45 times | 48 times | 53 times | 18 times | 5 times |
| | | No copper protective film | 42 times | 42 times | 44 times | 48 times | 10 times | 5 times |

**TABLE 4**

| Ex. | | | 19 | 20 | 21 | 22 | 23 | 24 |
|---|---|---|---|---|---|---|---|---|
| Composition ratio (mass%) | Solvent | MIBK | 17.46 | 17.42 | 17.33 | 17.25 | 17.25 | 18.05 |
| | Epoxy resin | jER828 | 26.7 | 26.7 | 26.7 | 26.7 | 26.7 | 26.7 |
| | Curing agent | DICY | 3.2 | 3.2 | | | | |
| | | SDH | | | 3.2 | | 3.2 | 3.2 |
| | | ADH | | | | 3.2 | | |
| | Reactive diluent | DY-T | 1.4 | 1.4 | 1.4 | 1.4 | 1.4 | 1.4 |
| | Curing accelerator | DBTDL | 0.1 | 0.1 | 0.1 | 0.1 | 0.1 | 0.1 |
| | | UR500 | 1.5 | 1.5 | | | | |
| | | 2E4MZ | | | 1.2 | 1.2 | 1.2 | 0.6 |
| | | IBMI-12 | | | 0.3 | 0.3 | 0.3 | 0.9 |
| | Dispersant (*1) | BYK116 (65/0) | | | 1.3 | | | |
| | | BYK2163 (10/0) | 1.3 | | | | | 0.5 |
| | | BYK2155 (48/0) | | | | | | |
| | | BYK110 (0/53) | | | | 1.3 | | |
| | | BYK106 (74/132) | | 1.3 | | | 1.3 | |
| | Anti-corrosive pigment | Zinc calcium cyanamide | 16.6 | 16.6 | 16.6 | 16.6 | 16.6 | 16.6 |
| | Extender pigment | Talc | 16.2 | 16.2 | 16.2 | 16.2 | 16.2 | 16.2 |
| | | Barium sulfate | 12.1 | 12.1 | 12.1 | 12.1 | 12.1 | 12.1 |
| | Coloring pigment | Titanium oxide | 3.1 | 3.1 | 3.1 | 3.1 | 3.1 | 3.1 |
| | | Carbon black | 0.3 | 0.3 | 0.3 | 0.3 | 0.3 | 0.3 |
| | Reactive silicone oil (*2) | X-22-2000 (620/absent) | | | | | | |
| | | X-22-4741 (2500/present) | | | | 0.25 | 0.25 | 0.25 |
| | | KF=101 (350/absent) | 0.04 | 0.08 | 0.17 | | | |
| | | KF-105 (490/absent) | | | | | | |
| | Total | | 100 | 100 | 100 | 100 | 100 | 100 |
| Solid content concentration (mass%) | | | 83 | 83 | 83 | 83 | 83 | 82 |
| Thermosetting resin in solid content (mass%) | | | 40 | 40 | 38 | 38 | 38 | 38 |
| Pigment in solid content (mass%) | | | 59 | 58 | 58 | 58 | 58 | 59 |
| Dispersant in solid content (mass%) | | | 1.57 | 1.57 | 1.57 | 1.57 | 1.57 | 0.61 |
| Reactive silicone oil in solid content (mass%) | | | 0.0485 | 0.0969 | 0.2056 | 0.3021 | 0.3021 | 0.3051 |
| Evaluations | Appearance of coating film | | Fail | Pass | Pass | Fail | Fail | Fail |
| | Hydrochloric acid test | Copper protective film present | Fail | Fail | Pass | Fail | Fail | Fail |
| | | No copper protective film | Fail | Fail | Pass | Fail | Fail | Fail |
| | Water vapor cycle test | Copper protective film present | 8 times | 3 times | 41 times | 12 times | 7 times | 18 times |
| | | No copper protective film | 6 times | 3 times | 40 times | 10 times | 5 times | 12 times |

**TABLE 5**

| Ex. | | | 25 | 26 | 27 | 28 | 29 | 30 |
|---|---|---|---|---|---|---|---|---|
| Composition ratio (mass%) | Solvent | MIBK | 17.05 | 17.05 | 17.3 | 17.298 | 17.26 | 17.22 |
| | Epoxy resin | jER828 | 26.7 | 26.7 | 26.7 | 26.7 | 26.7 | 26.7 |
| | Curing agent | DICY | | | | | | |
| | | SDH | 3.2 | 3.2 | 3.2 | 3.2 | 3.2 | 3.2 |
| | | ADH | | | | | | |
| | Reactive diluent | DY-T | 1.4 | 1.4 | 1.4 | 1.4 | 1.4 | 1.4 |
| | Curing accelerator | DBTDL | 0.1 | 0.1 | 0.1 | 0.1 | 0.1 | 0.1 |
| | | UR500 | | | | | | |
| | | 2E4MZ | 1.7 | 1.7 | 1.7 | 1.7 | 1.7 | 1.7 |
| | | IBMI-12 | | | | | | |
| | Dispersant (*1) | BYK116 (65/0) | | | | 1.3 | 1.3 | 1.3 |
| | | BYK2163 (10/0) | 1 | 1.3 | 1.6 | | | |
| | | BYK2155 (48/0) | | | | | | |
| | | BYK110 (0/53) | | | | | | |
| | | BYK106 (74/132) | | | | | | |
| | Anti-corrosive pigment | Zinc calcium cyanamide | 16.6 | 16.6 | 16.6 | 16.6 | 16.6 | 16.6 |
| | Extender pigment | Talc | 16.2 | 16.2 | 16.2 | 16.2 | 16.2 | 16.2 |
| | | Barium sulfate | 12.1 | 12.1 | 12.1 | 12.1 | 12.1 | 12.1 |
| | Coloring pigment | Titanium oxide | 3.1 | 3.1 | 3.1 | 3.1 | 3.1 | 3.1 |
| | | Carbon black | 0.3 | 0.3 | 0.3 | 0.3 | 0.3 | 0.3 |
| | Reactive silicone oil (*2) | X-22-2000 (620/absent) | | | | | | |
| | | X-22-4741 (2500/present) | 0.25 | 0.5 | | | | |
| | | KF-101 (350/absent) | | | | 0.002 | 0.04 | 0.08 |
| | | KF-105 (490/absent) | | | | | | |
| | Total | | 99.7 | 100.25 | 100.3 | 100 | 100 | 100 |
| Solid con | content concentration (mass%) | | 83 | 83 | 83 | 83 | 83 | 83 |
| Thermosettinq resin in solid content (mass%) | | | 38 | 38 | 38 | 38 | 38 | 38 |
| Pigment in solid content (mass%) | | | 58 | 58 | 58 | 58 | 58 | 58 |
| Dispersant in solid content (mass%) | | | 1.21 | 1.56 | 1.93 | 1.57 | 1.57 | 1.57 |
| Reactive silicone oil in solid content (mass%) | | | 0.3025 | 0.6010 | 0 | 0.0024 | 0.0483 | 0.0966 |
| Evaluations | Appearance of coating film | | Fail | Fail | Fail | Pass | Pass | Pass |
| | Hydrochloric acid test | Copper protective film present | Fail | Fail | Pass | Pass | Pass | Pass |
| | | No copper protective film | Pass | Pass | Fail | Pass | Pass | Pass |
| | Water vapor cycle test | Copper protective film | 34 times | 41 times | 18 times | 43 times | 41 times | 42 times |
| | | No copper protective film | 20 times | 40 times | 9 times | 40 times | 40 times | 40 times |

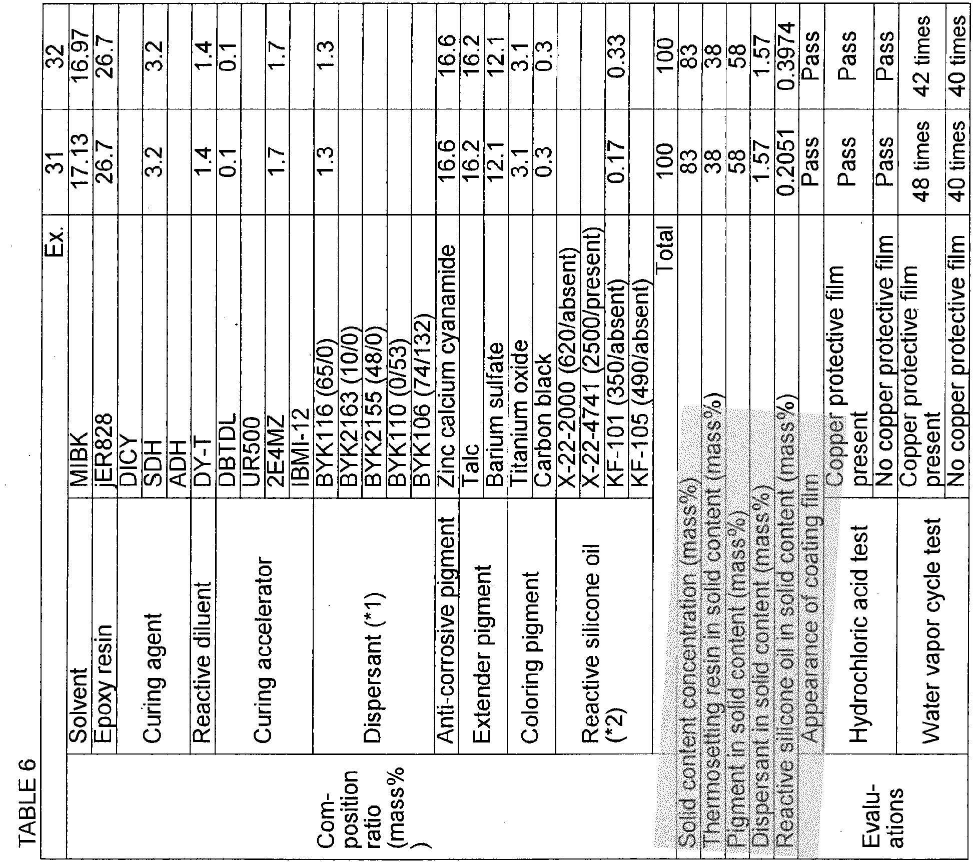

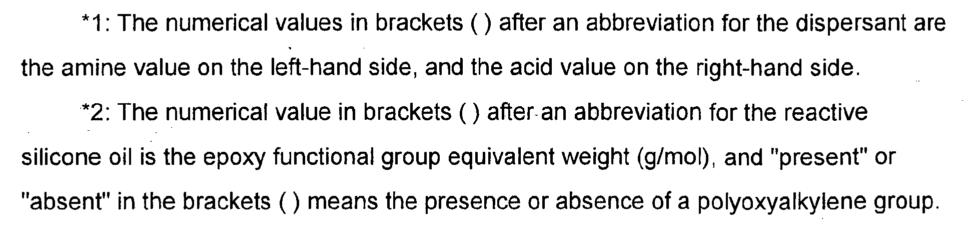

Abbreviations and compounds in the Tables are as follows.
MIBK: methyl isobutyl ketone
jER828: bisphenol A-type epoxy resin, jER828, manufactured by Japan Epoxy Resins Co., Ltd.
DICY: dicyandiamide, Dyhard (registered trademark) 100SF, manufactured by SKW Trostberg AG.
SDH: sebacic acid dihydrazide, manufactured by NIHON FINE CHEMICAL Co., Ltd.
ADH: adipic acid dihydrazide, manufactured by NIHON FINE CHEMICAL Co., Ltd.
DY-T: trimethylolpropane triglycidyl ether, Araldite (registered trademark) DY-T, manufactured by Ciba Specialty Chemicals
DBTDL: dibutyltin dilaurate
UR500: urea type curing accelerator, Dyhard (registered trademark) UR500, manufactured by SKW Trostberg AG
2E4MZ: 2-ethyl-4-methylimidazole, manufactured by SHIKOKU CHEMICALS CORPORATION
IBMI-12: 1-isobutyl-2-methylimidazole, manufactured by SHIKOKU CHEMICALS CORPORATION
BYK116: DISPERBYK (registered trademark)-116 manufactured by BYK (amine value: 65 mgKOH/g, acid value: 0 mgKOH/g, acrylic type copolymer)
BYK2163: DISPERBYK (registered trademark)-2163 manufactured by BYK (amine value: 10 mgKOH/g, acid value: 0 mgKOH/g, block copolymer)
BYK2155: DISPERBYK (registered trademark)-2155 manufactured by BYK (amine value: 48 mgKOH/g, acid value: 0 mgKOH/g, block copolymer)
BYK110: DISPERBYK (registered trademark)-110 manufactured by BYK (amine value: 0 mgKOH/g, acid value: 53 mgKOH/g, copolymer having acid groups)
BYK106: DISPERBYK (registered trademark)-106 manufactured by BYK (amine value: 74 mgKOH/g, acid value: 132 mgKOH/g, polymer salt having acid groups)
Zinc calcium cyanamide: ZK-S2 manufactured by Kikuchi Color and Chemicals Corporation
Talc: SG-95, manufactured by Nippon Talc Co., Ltd.
Barium sulfate: W-10 manufactured by TAKEHARA KAGAKU KOGYO CO., LTD.
Titanium oxide: R-650 manufactured by SAKAI CHEMICAL INDUSTRY CO., LTD.
Carbon black: CP carbon black manufactured by Sigma Aldrich Japan K.K.
X-22-2000: X-22-2000 manufactured by Shin-Etsu Chemical Co., Ltd (functional group equivalent weight of epoxy groups: 620 g/mol, epoxy-modified silicone oil)
X-22-4741: X-22-4741 manufactured by Shin-Etsu Chemical Co., Ltd (functional group equivalent weight of epoxy groups: 2,500 g/mol, epoxy-modified silicone oil, polyoxyalkylene chain present)
KF-101: KF-101 manufactured by Shin-Etsu Chemical Co., Ltd (functional group equivalent weight of epoxy groups: 350 g/mol, epoxy-modified silicone oil)
KF-105: KF-105 manufactured by Shin-Etsu Chemical Co., Ltd (functional group equivalent weight of epoxy groups: 490 g/mol, epoxy-modified silicone oil)

The mirrors in Ex. 2 to 9, 11 to 16, 21 and 28 to 32 (Examples of the present invention) were excellent in acid resistance and had good appearance of the coating film and good water resistance, since the back coating composition contained the specific amino group-containing polymer and the specific reactive silicone oil.

With respect to the mirrors in Ex. 1, 10, 17 to 20 and 22 to 27 (Comparative Examples), such a tendency was observed that they were inferior in the acid resistance in a case where the back coating composition did not contain the specific amino group-containing polymer, and they were inferior in the appearance of the coating film and in the water resistance in a case where the back coating composition did not contain the specific reactive silicone oil.

### INDUSTRIAL APPLICABILITY

The mirror having a back coating film formed by using the back coating composition of the present invention is excellent in acid resistance, appearance of the back side and water resistance, and thus is useful as a mirror to be installed in a bathroom, a restroom, a lavatory, etc.

The entire disclosure of Japanese Patent Application No. 2012-284687 filed on December 27, 2012 including specification, claims, drawings and summary is incorporated herein by reference in its entirety.

### REFERENCE SYMBOLS

- 10:: Mirror
- 11:: Glass substrate
- 12:: Silver mirror film (metal film)
- 13:: Metal protective film (metal film)
- 14:: Back coating film

## Claims

1. A back coating composition for forming a back coating film on the back side of a mirror, which comprises a thermosetting resin, a pigment, a dispersant and a reactive silicone oil, wherein as the thermosetting resin, an epoxy resin (excluding a reactive silicone oil having epoxy groups) and an amine-type curing agent are contained, as the dispersant, an amino group-containing polymer having an amine value of at least 20 mgKOH/g and having no acid group, is contained, and as the reactive silicone oil, an epoxy-modified silicone oil having epoxy groups and having no polyoxyalkylene chain, is contained.

2. The back coating composition according to Claim 1, wherein amine value of the amino group-containing polymer is from 20 to 70 mgKOH/g.

3. The back coating composition according to Claim 1 or 2, wherein the proportion of the amino group-containing polymer is from 20 to 100 mass% in the dispersant (100 mass%).

4. The back coating composition according to any one of Claims 1 to 3, wherein a functional group equivalent weight of epoxy groups in the epoxy-modified silicone oil is at most 1,000 g/mol.

5. The back coating composition according to any one of Claims 1 to 4, wherein the epoxy resin is a bisphenol A type epoxy resin.

6. The back coating composition according to any one of Claims 1 to 5, wherein the amine type curing agent is a dicyandiamide or an organic acid dihydrazide.

7. The back coating composition according to any one of Claims 1 to 6, wherein as the thermosetting resin, at least one curing accelerator selected from the group consisting of organic tin compounds, urea derivatives and imidazoles is contained.

8. The back coating composition according to any one of Claims 1 to 7, wherein in the solid content (100 mass%) of the back coating composition excluding a solvent from the back coating composition, the proportion of the thermosetting resin is from 30 to 50 mass%, the proportion of the pigment is from 50 to 70 mass%, the proportion of the dispersant is from 1 to 13 mass%, and the proportion of the reactive silicone oil is from 0.001 to 0.5 mass%.

9. The back coating composition according to any one of Claims 1 to 8, wherein as the pigment, an extender pigment is contained.

10. The back coating composition according to any one of Claims 1 to 9, wherein as the pigment, an anti-corrosive pigment is contained.

11. A mirror comprising a glass substrate, a metal film formed on the glass substrate, and a back coating film formed on the metal film by using the back coating composition as defined in any one of Claims 1 to 10.

12. The mirror according to Claim 11, wherein the film thickness of the back coating film is from 30 to 100 µm.

13. The mirror according to Claim 11 or 12, wherein the metal film consists of a silver mirror film formed on the glass substrate and a metal protective film formed on the silver mirror film.

14. The mirror according to Claim 11 or 12, wherein the metal film is a silver mirror film formed on the glass substrate.

15. A mirror comprising a glass substrate, a metal film formed on the glass substrate, and a back coating film formed on the metal film, said mirror satisfying the following conditions (a) and (b):
(a) after the mirror is immersed in 10 mass% hydrochloric acid at 20°C for 48 hours, peeling of the metal film from a cut surface is at most 5 mm, and
(b) after a cycle comprising a step of letting the mirror stand still in an atmosphere at a temperature of 60°C under a relative humidity of 95% for 8 hours and a step of letting the mirror stand still in an atmosphere at a temperature of 25°C under a relative humidity of 60% for 16 hours, is repeated 40 times, peeling of the metal film from a cut surface is at most 5 mm.
